# EUROPÄISCHE PATENTANMELDUNG

(11) **EP 1 801 726 A1**
(43) Veröffentlichungstag der Anmeldung: **27.06.2007**
(21) Anmeldenummer: 06026174.0
(22) Anmeldetag: 18.12.2006
(51) Int. Cl.: G06F 21/20

(54) **Vorrichtung und Verfahren zur Erzeugung eines Authentifizierungsmerkmals**

(30) Priorität: 20.12.2005 DE 102005061281
(71) Anmelder: Suft, Wolfgang, 90425 Nürnberg (DE); Jetmar, Jürgen, 6300 Zug (CH)
(72) Erfinder: Suft, Wolfgang, 90425 Nürnberg (DE); Jetmar, Jürgen, 6300 Zug (CH)
(74) Vertreter: Schneider, Andreas

(57) **Zusammenfassung**

Um eine Technik zur Verfügung zu stellen, die eine besonders sichere Authentifizierung, beispielsweise in einem Rechnernetz, ermöglicht, wird eine Vorrichtung (1) zum Erzeugen eines Authentifizierungsmerkmals (6) für einen Benutzer eines Datenverarbeitungsmittels (31) vorgeschlagen, mit einer Einheit (13) zum Erzeugen des Authentifizierungsmerkmals (6) unter Verwendung benutzerspezifischer und/oder vorrichtungsspezifischer Authentifizierungsdaten (19) einerseits und der geographischen Position (10) des Benutzers andererseits und mit einer Anzeigeeinheit (3) zum Anzeigen des Authentifizierungsmerkmals (6) und/oder mit einer Übertragungseinheit (9) zum Übertragen des Authentifizierungsmerkmals (6) an eine Vorrichtung (34) zum Überprüfen einer Zugangsberechtigung.

## Beschreibung

Die Erfindung betrifft eine Vorrichtung und ein Verfahren zur Erzeugung eines Authentifizierungsmerkmals. Darüber hinaus betrifft die Erfindung eine Vorrichtung zum Überprüfen einer Zugangsberechtigung, eine Vorrichtung zum Authentifizieren eines Benutzers sowie ein Authentifizierungssystem und ein Verfahren zur Authentifizierung eines Benutzers. Schließlich betrifft die vorliegende Erfindung auch ein Authentifizierungsmerkmal selbst.

Der Zugriff auf beliebige Rechnerhardware und -software, beispielsweise Einzelrechner, Rechnernetze, Computerprogramme, wie Datenbanken etc., erfolgt aufgrund der gestiegenen Sicherheitsbedürfnisse vor allem in Unternehmen immer häufiger mit Hilfe eines Authentifizierungsverfahrens.

Als Authentifizierung wird die Überprüfung der Identität einer Person, hier eines Benutzers, anhand eines bestimmten Merkmals bezeichnet. Dieses Authentifizierungsmerkmal kann beispielsweise ein Fingerabdruck des Benutzers oder ein Paßwort sein.

Eine Aufgabe der vorliegenden Erfindung ist es, eine Technik zur Verfügung zu stellen, die eine besonders sichere Authentifizierung ermöglicht.

Diese Aufgabe wird durch eine Vorrichtung nach Anspruch 1 zum Erzeugen eines Authentifizierungsmerkmals für einen Benutzer eines Datenverarbeitungsmittels gelöst, mit einer Einheit zum Erzeugen des Authentifizierungsmerkmals unter Verwendung benutzerspezifischer und/oder vorrichtungsspezifischer Authentifizierungsdaten einerseits und der geographischen Position des Benutzers andererseits und mit einer Anzeigeeinheit zum Anzeigen des Authentifizierungsmerkmals und/oder mit einer Übertragungseinheit zum Übertragen des Authentifizierungsmerkmals an eine Vorrichtung zum Überprüfen einer Zugangsberechtigung.

Darüber hinaus wird diese Aufgabe durch ein Verfahren nach Anspruch 5 zur Erzeugung eines Authentifizierungsmerkmals für einen Benutzer eines Datenverarbeitungsmittels gelöst, mit den Schritten: Erzeugen des Authentifizierungsmerkmals unter Verwendung der geographischen Position des Benutzers und Anzeigen des Authentifizierungsmerkmals und/oder Übertragen des Authentifizierungsmerkmals an eine Vorrichtung zum Überprüfen einer Zugangsberechtigung.

Darüber hinaus wird diese Aufgabe durch eine Vorrichtung nach Anspruch 6 zum Überprüfen einer Zugangsberechtigung gelöst, mit einer Kommunikationseinrichtung, umfassend eine Übertragungseinheit zum Übertragen eines im Zusammenhang mit einer Benutzerzugangsanfrage erhaltenen, mit einer Vorrichtung nach einem der Ansprüche 1 bis 4 unter Verwendung der geographischen Position des Benutzers erzeugten Authentifizierungsmerkmals an eine Authentifizierungsvorrichtung und eine Empfangseinheit zum Empfangen eines von der Authentifizierungsvorrichtung übertragenen Ergebnissignals, und mit einer Vergabeeinrichtung zum Vergeben einer Zugangsberechtigung für den Benutzer in Abhängigkeit von dem Ergebnissignal.

Darüber hinaus wird diese Aufgabe durch eine Vorrichtung nach Anspruch 8 zum Authentifizieren eines Benutzers mit Hilfe eines mit einer Vorrichtung nach einem der Ansprüche 1 bis 4 unter Verwendung der geographischen Position des Benutzers erzeugten Authentifizierungsmerkmals gelöst, mit einer Kommunikationseinrichtung, umfassend eine Empfangseinheit zum Empfangen eines von einer Überprüfungsvorrichtung übertragenen Authentifizierungsmerkmals und eine Übertragungseinheit zum Übertragen eines Ergebnissignals an die Überprüfungsvorrichtung, und mit einer Signalerzeugungseinrichtung zum Erzeugen des Ergebnissignals in Abhängigkeit von dem Authentifizierungsmerkmal.

Darüber hinaus wird diese Aufgabe durch ein System zum Authentifizieren eines Benutzers eines Datenverarbeitungsmittels nach Anspruch 13 gelöst, mit einer Vorrichtung zum Überprüfen der Zugangsberechtigung nach Anspruch 6 oder 7 und einer Vorrichtung zum Authentifizieren des Benutzers nach einem der Ansprüche 8 bis 12.

Darüber hinaus wird diese Aufgabe durch ein Verfahren zur Authentifizierung eines Benutzers eines Datenverarbeitungsmittels nach Anspruch 14 gelöst, mit den Schritten: Übertragen eines im Zusammenhang mit einer Benutzerzugangsanfrage erhaltenen, mit einer Vorrichtung nach einem der Ansprüche 1 bis 4 unter Verwendung der geographischen Position des Benutzers erzeugten Authentifizierungsmerkmals von einer Überprüfungsvorrichtung an eine Authentifizierungsvorrichtung, Erzeugen eines Ergebnissignals in Abhängigkeit von dem Authentifizierungsmerkmal durch die Authentifizierungsvorrichtung, Übertragen des Ergebnissignals von der Authentifizierungsvorrichtung an die Überprüfungsvorrichtung, und Vergeben einer Zugangsberechtigung für den Benutzer in Abhängigkeit von dem Ergebnissignal.

Schließlich wird diese Aufgabe durch ein Authentifizierungsmerkmal für einen Benutzer eines Datenverarbeitungsmittels nach Anspruch 17 gelöst, dadurch gekennzeichnet, daß es neben benutzerspezifischen und/oder vorrichtungsspezifischen Authentifizierungsdaten eine Angabe über die geographische Position des Benutzers umfaßt.

Mit der Erfindung wird eine Authentifizierungstechnik bereitgestellt, die eine ortsabhängige Authentifizierung ermöglicht. Anders ausgedruckt kann der Kuthentifizierungsprozeß beispielsweise im Internet oder bei beliebigen Softwareanwendungen in Abhängigkeit von Ortsinformationen überwacht werden. Darüber hinaus kann auch die sich an eine Authentifizierung eines Benutzers anschließende Autorisierung des Benutzers ortsabhängig erfolgen.

Unter einem Benutzer wird dabei entweder eine mit dem erfindungsgemäßen System über eine Mensch-Maschine-Schnittstelle Daten austauschende natürliche Person (Mensch) oder aber ein automatisiert über eine Maschine-Maschine-Schnittstelle mit dem erfindungsgemäßen System Daten austauschendes technisches System (Maschine) verstanden. Mit anderen Worten kann nicht nur eine Authentifizierung einer Person, beispielsweise eines Mitarbeiters eines Unternehmens, sondern beispielsweise auch eine Authentifizierung eines Rechners oder allgemein einer Maschine in Abhängigkeit von ihrem geographischen Standort erfolgen.

Eine grundlegende Idee der Erfindung besteht in der Verwendung von Ortsinformationen (geographischen Positionsangaben) zusätzlich zu einem benutzer- oder vorrichturigsspezifischen Merkmal, welches der eigentlichen Identitätsfeststellung des Benutzers dient. Das Paßwort enthält mit anderen Worten die geographischen Daten des Standortes, von dem der Benutzer die Eingabe vornimmt. Darüber hinaus ist es vorzugsweise zeitgebunden und erneuert sich alle 30 Sekunden (konfigurierbar).

Gegenüber anderen Lösungen zeichnet sich die Erfindung beispielsweise dadurch aus, daß sichergestellt werden kann, daß sich berechtigte Personen an einem System nur von einem vorab festgelegten Ort aus anmelden können. Darüber hinaus kann auch festgelegt werden, daß einem Benutzer Benutzerrechte in Abhängigkeit von seinem Aufenthaltsort zugewiesen werden. Beispielsweise kann damit gewährleistet werden, daß ein Außendienstmitarbeiter, der sich in seinem Büro am Stammsitz des Unternehmens befindet, nach einer Authentifizierung Schreibrechte für eine Datenbankanwendung erhält, während der gleiche Außendienstmitarbeiter für die gleiche Datenbankanwendung nach einer Authentifizierung lediglich Leserechte erhält, wenn er sich außerhalb des Firmengeländes befindet, beispielsweise bei einem Kunden.

Unter einem Datenverarbeitungsmittel wird dabei jedwede Form von Hardware und/oder Software verstanden. Die vorliegende Erfindung ist mit anderen Worten universell und systemübergreifend einsetzbar. Mögliche Einsatzgebiete sind u.a.: Authentifizierung und Autorisierung von e-Transaktionen in der Banken- und Dienstleistungsbranche, sichere HomeOffice-Lösungen, hochsichere, personengebundene Zugangssicherung zu Desktop-Stationen (Betriebssystem-LogIn), Sicherung von Anwendungen in WLAN- und VPN-Systemen, Absicherung von Transaktionen bei Bankgeschäften über das Internet, Internetauktionen und Internetshops.

Vorteilhafte Ausführungen der Erfindung sind in den Unteransprüchen angegeben. Diese und weitere vorteilhafte Ausführungen der Erfindung werden nachfolgend anhand eines Ausführungsbeispiels der Erfindung beschrieben, das anhand der Zeichnungen näher erläutert wird. Hierbei zeigen:
- Fig. 1: eine vereinfachte Darstellung einer erfindungsgemäßen Vorrichtung zur Erzeugung eines Authentifizierungsmerkmals,
- Fig. 2: eine schematische Darstellung der Vorrichtung aus Fig. 1,
- Fig. 3: eine Darstellung einer Kategorisierung der Erdoberfläche,
- Fig. 4: eine Darstellung von Oberflächenzonen,
- Fig. 5: den Aufbau eines erfindungsgemäßen Authentifizierungsmerkmals, und
- Fig. 6: eine schematische Darstellung eines erfindungsgemäßen Authentifizierungssystems.

Sämtliche Figuren zeigen die Erfindung lediglich schematisch und mit ihren wesentlichen Bestandteilen.

Die folgende Beschreibung erfolgt aus der Sicht eines menschlichen Benutzers, bei dem die Interaktion mit dem System über Bedienelemente und die Darstellung über ein Display erfolgt. Die Beschreibung gilt analog auch für einen technischen Benutzer. In diesem Fall erfolgt die Interaktion sowie die Darstellung auf anderem, automatisiertem Weg.

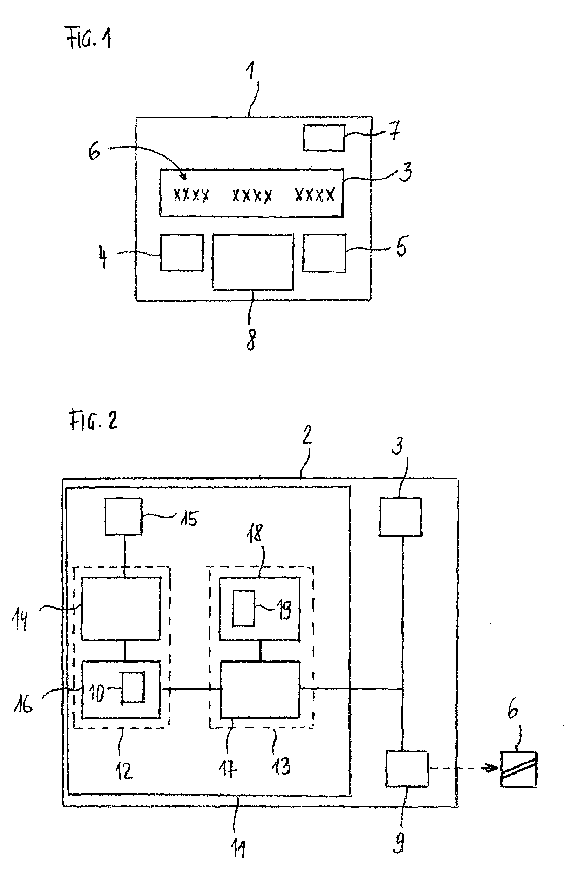

Ein Beispiel einer erfindungsgemäßen Vorrichtung zur Erzeugung eines Authentifizierungsmerkmals auf Mikrochip-Basis in Form einer Scheckkarte ist in den Fig. 1 und 2 dargestellt. Bei dieser nach Art einer SmartCard aufgebauten Paßwortkarte 1 ist in einem Gehäuse eine Platinenbaueinheit (Chip) 2 angeordnet, auf der die weiter unten im Detail beschriebenen Funktionsmodule montiert sind. Die Paßwortkarte 1 weist u.a. ein Display 3 und eine Reihe von Bedienelementen (Knöpfen, Tastern oder dergleichen) auf.

Die Bedienung der Paßwortkarte 1 ist wie folgt: Bei einer Betätigung des "Ein/Aus"-Schalters 4 wird die Paßwortkarte 1 an- bzw. aus Stromspargründen komplett ausgeschaltet.

Bei einer Betätigung des "Paßwort"-Schalters 5 wird ein aktuell gültiges, zeit- und ortsabhängiges Paßwort 6 erstellt und auf dem Display 3 angezeigt. Durch mehrmaliges Drücken kann die Auflösung (Länge) des Paßwortes 6 verändert werden.

Bei einer Betätigung des "Bluetooth"-Schalters 7 wird eine Bluetooth-Funktion aktiviert, um GPS-Daten und/oder ein erzeugtes Paßwort 6 von der Paßwortkarte 1 an ein Empfängersystem, z.B. ein Notebook oder einen Desktop-PC, zu senden.

Optional ist die Paßwortkarte 1 mit einem optischen Scanner 8 ausgestattet, der zur Durchführung eines Fingerabdruck-Scans ausgebildet ist. Die Erkennung des Fingerabdruckes des Benutzers kann zum einen zum Einschalten der Paßwortkarte 1 verwendet werden (biometrische Authentifizierung des Benutzers). Zum anderen kann vorgesehen sein, daß ein Paßwort 6 nur dann generiert wird, wenn eine biometrische Authentifizierung erfolgreich durchgeführt wurde. Mit Hilfe einer Bluetooth-Schnittstelle 9 kann der Fingerabdruck auch automatisch z.B. an ein Notebook übertragen werden. Die Kommunikationsschnittstelle 9 kann auch für ein anderes Datenübertragungsverfahren ausgebildet sein.

Die Platinenbaueinheit 2 muß jedoch nicht zur Bildung einer Paßwortkarte 1 in einem scheckkartenförmigen Gehäuse angeordnet sein. Die Platinenbaueinheit 2 kann auch in alle möglichen beweglichen elektronischen Geräte integriert werden, z.B. in Uhren, Mobiltelefonen, MP3/Disk-Player, Walkman und Computerzubehör wie Maus, Tastatur, PCMCIA-Karten, USB-Sticks etc. Darüber hinaus kann die Platinenbaueinheit 2 auch in nicht-elektronische Geräte integriert werden, beispielsweise in Schlüsselanhänger oder ähnliches.

Wie in Fig. 2 abgebildet, ist auf der Platinenbaueinheit 2 neben dem Display 3 zum Anzeigen des Paßwortes 6 und der Bluetooth-Schnittstelle 9 zum Übertragen des Paßwortes 6 an eine externe Empfängerstation eine Einheit 11 zum Erzeugen des Paßwortes 6 vorgesehen, wobei Display 3 und Schnittstelle 9 mit dieser Einheit 11 verbunden sind.

Die Einheit 11 zum Erzeugen des Paßwortes 6 ist zweigeteilt und besteht aus einer Positionsbestimmungskomponente 12 und einer damit verbundenen Paßworterzeugungskomponente 13. Die auf Hochfrequenztechnologie basierende Positionsbestimmungskomponente 12 umfaßt neben einer HF-Stufe 14 und einer Antenne 15 auch einen Mikroprozessor 16 und ist zum Empfang von GPS-Signalen ausgebildet. Aus den GPS-Signalen wird in dem Mikroprozessor 16 die geographische Position der Positionsbestimmungskomponente 12 und damit die geographische Position 10 des den Paßwort-Schalter 5 betätigenden Benutzers ermittelt. Der Prozeß der Positionsbestimmung in der Positionsbestimmungskomponente 12 basiert primär auf der Analyse von Laufzeitdifferenzen von Signalen. Da für das GPS-Signal bereits fertige Positionsbestimmungslösungen verfügbar sind, kann auch für die hier verwendete Positionsbestimmungskomponente 12 eine standardisierte Komponente zum Einsatz kommen. Die geographische Position 10 des Benutzers wird zu der Paßworterzeugungskomponente 13 übertragen und dort zur Erzeugung des Paßwortes 6 verwendet.

Die Paßworterzeugungskomponente 13 umfaßt einen weiteren Mikroprozessor 17 sowie einen RAM-Speicher 18. Der Mikroprozessor 17 dient u.a. zum Erzeugen einer Angabe über die geographische Position 10 des Benutzers unter Verwendung der geographischen Position 10 des Benutzers. Das Erzeugen umfaßt dabei ein Komprimieren geographische Positionsdaten, wie unten im Detail beschrieben. Die Steuerung der Benutzerinteraktion und des Displays 3 bzw. der Kommunikationsschnittstelle 9 erfolgt bei Bedarf auf höherer Ebene. Damit ist die Integrierbarkeit des Systems in bestehende, mikroprozessorbasierte Systeme einfach möglich.

In dem RAM-Speicher 18 sind benutzerspezifische und/oder vorrichtungsspezifische Authentifizierungsdaten hinterlegt. Insbesondere umfassen diese Authentifizierungsdaten einen karten- und damit benutzerspezifischen Sicherheitstoken 19. Teile dieser Authentifizierungsdaten werden von dem Mikroprozessor 17 zusammen mit der Angabe über die geographische Position des Benutzers zur Erzeugung eines zeit- und positionsabhängigen Paßwortes 6 verwendet. Der RAM-Speicher 18 ist in Teilen als EPROM ausgelegt und speichert den Sicherheitstoken 19 des Benutzers als auch die für die Verdichtung der geographischen Daten erforderlichen Koordinatensysteme, wie unten beschrieben. Der Sicherheitstoken 19 wird bei Herstellung und Initialisierung der Paßwortkarte 1 einmalig auf den EPROM aufgespielt. Dabei ist durch geeignete Maßnahmen sichergestellt, daß der Sicherheitstoken 19 durch keine Funktion direkt aus der Paßwortkarte 1 ausgelesen werden kann.

Weiterhin sieht die Paßworterzeugungskomponente 13 Mechanismen der periodischen Speicherung von aktuellen geographischen Positionsdaten vor. Dies ist insbesondere wichtig für Situationen, in denen der Empfang von (GPS-) Hochfrequenzsignalen erschwert oder gar unmöglich ist. Die Paßwortkarte 1 erstellt die Paßwörter dann mit den zuletzt empfangenen und zwischengespeicherten Positionsdaten. Dabei ist eine Zeitprüfung vorgesehen, nach deren Ablauf die Cache-Daten als ungültig erklärt werden und das Paßwort 6 auf Basis einer "UNDEFINED AREA"-Codierung generiert wird. Durch den Authentifizierungsserver kann damit bestimmt werden, ob die Anmeldung aus einer unbestimmten Position aus möglich sein soll oder nicht.

Der Empfang von GPS-Signalen in Gebäuden unterliegt zur Zeit noch Einschränkungen. Durch Integration leistungsfähiger Antennensysteme in die Positionsbestimmungskomponente 12 kann jedoch die Funktionsfähigkeit in normalen Gebäuden gewährleistet werden. Die für die höhere Leistungsaufnahme notwendige Batteriekapazität ist z.B. in Mobiltelefonen oder MP3-Walkmans ausreichend vorhanden. Alternativen zur Verwendung von Positionsdaten des GPS-Systems können - falls erforderlich - auch andere Signale, beispielsweise auch terrestrische Signale, verwendet werden. Hierzu sind ggf. Modifikationen an der Positionsbestimmungskomponente 12 erforderlich.

Ist aufgrund der angestrebten Größe der Endeinheit der Einsatz eines Akkus oder die Verwendung einer externen Stromversorgung nicht möglich, wie beispielsweise bei einer Chipkarte (Paßwortkarte 1) oder einem Schlüsselanhänger, so ist auch der Einsatz von Batterien, beispielsweise in Form von Mignonzellen, bei ausreichender Batterielebensdauer möglich. Die Integration weiterer externer Alternativen der Stromversorgung, wie z.B. Mini-Brennstoffzellen, ist möglich.

Die Paßworterzeugungskomponente 13 ist derart ausgelegt, daß in dem RAM-Speicher 18 unterschiedliche Koordinatensysteme hinterlegt werden können. Dabei können regionale Schwerpunkte berücksichtigt werden. Darüber hinaus werden mehrere Auflösungsstufen unterstützt. In der höchsten Auflösungsstufe stehen der Paßworterzeugungskomponente 13 die geographischen Daten weltweit, für die wichtigsten Regionen auch hochauflösend bis deutlich unter 50 Meter, zur Verfügung. Eine Eingrenzung des Ortes ist damit bis auf wenige Meter möglich. Die Ortsauflösung ist variabel gestaltbar. Zudem können mehrere Orte gleichzeitig vom System unterstützt werden.

Um aus der ermittelten geographischen Position eine Angabe über die geographische Position des Benutzers zu erhalten, werden die GPS-Daten in dem Mikroprozessor 17 der Paßworterzeugungskomponente 13 mit Hilfe eines Datenverarbeitungs-Algorithmus komprimiert. Anders ausgedrückt erfolgt eine Verdichtung von geographischen Ortsinformationen auf wenige Bits.

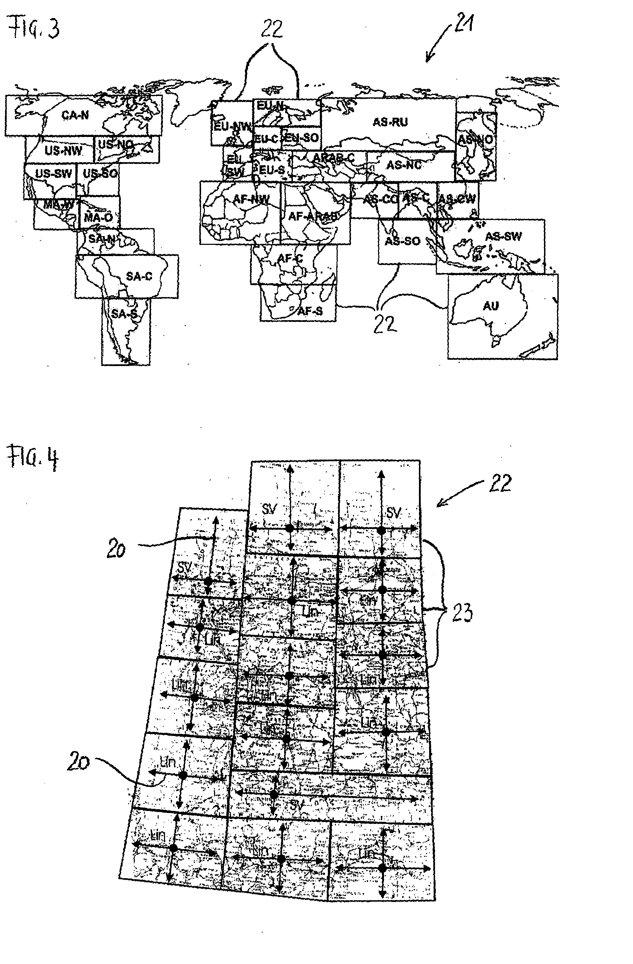

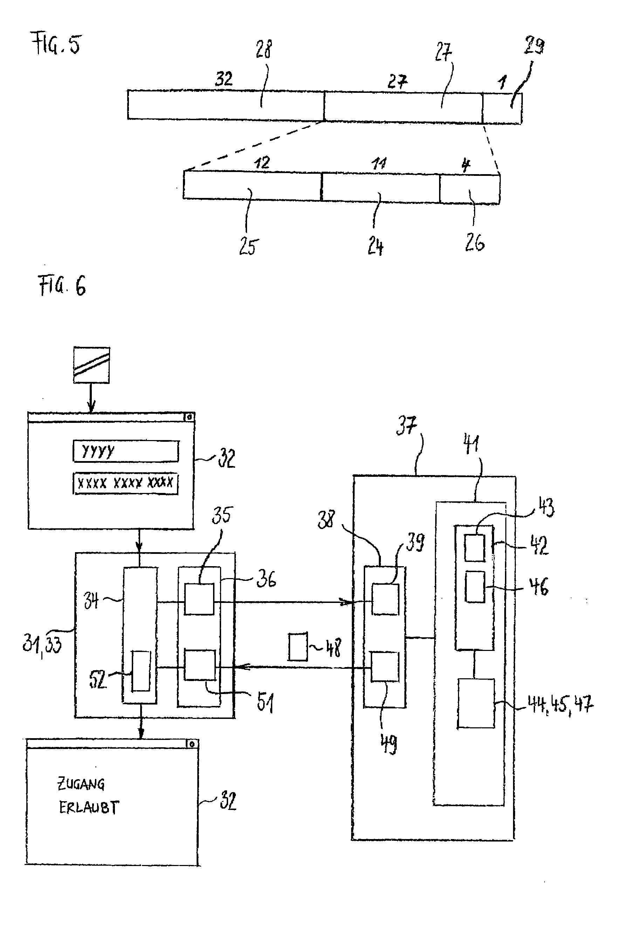

Grundlage hierfür ist zunächst eine Kategorisierung der Erdoberfläche. Herkömmliche Komprimierungsverfahren scheitern hier, da der maßgebliche Gewinn an Verdichtung abhängig ist von der Oberflächenstruktur der Erde. Im Folgenden wird die mit der Erfindung verwendete Systematik am Beispiel der höchsten Auflösungsstufe mit einem weltweit ausgelegten Koordinatensystem dargestellt. Andere, eher regional geprägte Verteilungen, unterliegen denselben Prinzipien. Im Beispiel kommt eine zweistufige Kategorisierung der Erdoberfläche 21 zur Anwendung, beispielhaft aufgezeigt für 32 Gebiete 22 ,bspw. EU-NW "Nordwesteuropa", EU-N "Nordeuropa", EU-C "Zentraleuropa" ..., mit jeweils 16 Zonen 23, optimiert u.a. nach dem Kriterium der Siedlungsdichte. Dabei werden primär Landmassen erfaßt. Nicht bewohnbare Gebiete wie z.B. die Ozeane, Wüsten und Polarzonen werden dabei ausgenommen oder nur mit sehr geringer Auflösung behandelt, vgl. Fig. 3 und 4.

Jede der Zonen 23 innerhalb eines Gebietes 22 ist mit einer eindeutigen Zonen-ID gekennzeichnet und wird mit einem eigenen Koordinatensystem 20 belegt, dessen Achsen mit einer beliebigen Funktion skaliert werden können, vgl. Fig. 4, wo beispielhaft die 16 Zonen 23 des Gebietes 22 "Zentraleuropa" abgebildet sind. Die Größe und Form der einzelnen Zonen 22 ist dabei u.a. nach dem Kriterium der Siedlungsdichte bestimmt.

Die in das Paßwort 6 zu integrierenden Informationen zur Ortsangabe beschränken sich auf die Zonen-ID sowie die relative Abweichung vom Mittelpunkt des Koordinatensystems 20 der jeweiligen Zone 23. Dieser Mittelpunkt ist frei definierbar, und nicht zwangsweise das geometrische Mittel der jeweiligen Zone 23. Die Achsenfunktionen können für die X- und Y-Achse getrennt bestimmt werden. Angaben zu den Gebieten 22 werden hingegen nicht mit übermittelt. Bei der Überprüfung der geographischen Angaben auf dem Authentifizierungsserver wird die übermittelte Zonen-ID daher gegen alle 16 Zonen aller 32 Gebiete geprüft. Aufgrund der geographischen Angaben kann dann eine Zuordnung zu dem richtigen Gebiet 22 einfach erfolgen. Alternativ kann serverseitig die Zahl der zu überprüfenden Gebiete 22 eingeschränkt werden. So ist es beispielsweise möglich, lediglich Gebiete 22 in Europa zuzulassen. Ebenso ist es möglich, lediglich bestimmte Zonen 23 innerhalb eines Gebietes 22 zuzulassen.

Das eigentliche Verdichtungsverfahren läuft in dem Mikroprozessor 17 wie folgt ab: Positionsdaten werden zumeist in einem standardisierten Format, bei GPS dem NMEA-Format, dargestellt. Ein normaler Datensatz hat bei GPS folgende Struktur: $GPRMC,191410,A, 4735.5634,N,00739.3538, E,0.0,0.0,181102,0.4,E,A*19. Für eine genaue Ortsangabe werden somit 21 Zeichen benötigt. Für eine unmittelbare Verwendung in einem Paßwort ist dieses Format daher ungeeignet.

Verwendet man standardgemäße Typen, die Programmiersprachen heute zur Speicherung von Variablen anbieten, so würde eine Ortsangabe, unter Verwendung des Verfahrens der Kategorisierung der Erdoberfläche 21, mindestens 10 Bytes = 80 Bits umfassen (2 Bytes für die Bestimmung des Quadranten, 4 Bytes jeweils für die relative Längen-/Breitenabweichung).

Will man diese Information anwenderfreundlich, also ohne Unterscheidung von Groß- und Kleinschreibung und mit einem Verzicht auf Sonderzeichen, darstellen, so wären alleine für die Ortsangabe die Eingabe von 16 Zeichen notwendig. Auch dies ist für eine unmittelbare Verwendung in einem Paßwort ungeeignet.

Für die Speicherung der Informationen mußten demnach spezielle Bit-Muster definiert werden, die eine maximale Ausschöpfung des theoretisch darstellbaren Zeichenumfangs ermöglichen. Erfindungsgemäß wird hierfür ein variabel auf Breiten und Längen verteilbares Bitmuster verwendet, das in der höchsten Auflösungsstufe 23 Bits aufweist.

Das geographische Profil der Erde ist so gestaltet, daß die Angabe der Breitengrade einer geringeren Auflösung bedarf als die Angabe der Länge. Für die meisten Quadranten (Zonen 23) wird daher ein Muster mit 11 Bits (entspricht dem Zahlenraum von 0 - 2047) für die Angabe der relativen Breitenabweichung 24 sowie 12 Bits (entspricht dem Zahlenraum von 0 - 4095) für die Angabe der relativen Längenabweichung 25 verwendet. Hinzu kommen 4 Bits für die Identifizierung 26 des Quadranten (Zone). Einen beispielhaften Aufbau eines Paßwortes 6 mit einer derartigen Struktur zeigt Fig. 5.

Für die alphanumerische Darstellung der Ortsangabe sind demnach hoch auflösend nur noch 6 Zeichen notwendig. Das entspricht einer Kompressionsrate von über 70 Prozent. In der geringsten Auflösungsstufe, die bei sehr stark regionaler Verteilung der Quadranten (Zonen 23) zu Anwendung kommen kann, ist eine Darstellung der Ortsinformation mit lediglich 8 Bits (zwei Zeichen) möglich.

Welche Funktionen zur Skalierung des Koordinatensystems 20, und damit zu der Bestimmung der relativen Abweichung, herangezogen werden, hängt ab von der Verteilung der Bevölkerungsdichte in den zu betrachtenden potentiell 512 möglichen Quadranten (Zonen 23). Im einfachsten Fall einer linearen Skalierung ist der zu erfassende Wert die Abweichung des erfaßten Meßpunktes von der Mitte des Koordinatensystems 20, sowohl für die geographische Länge und Breite. Ost/West- bzw. Nord/Süd-Angaben werden generell durch ein Vorzeichen abgebildet.

Der potentielle Wertebereich der Abweichungen ist durch die Größe des Quadranten (Zonen 23) bestimmt. Damit ist ein gemessener, geographischer Wert durch eine lineare Funktion auf das mögliche Spektrum, das durch das Bit-Muster gegeben ist, transformierbar. Lineare Skalierung kommt überwiegend in sehr dicht besiedelten Gebieten in Frage. Sehr häufig aber findet man die Gegebenheit, daß sich in einem Quadranten (Zonen 23) ein Ballungszentrum befindet, in dessen Umfeld die Besiedlungsdichte mehr oder minder stark abnimmt. Entscheidend ist daher, Achsenfunktionen für das Koordinatensystem 20 so zu definieren, daß diese Verteilung annähernd wiedergegeben wird. Neben Potenz-, exponentiellen oder logarithmischen Funktionen hat sich der Einsatz der Gauß'schen Normalverteilungsfunktion als sehr wirklichkeitsnah herausgestellt. Die Skalierungsfunktion ist damit abhängig von dem geographischen Mittelwert und der Standardabweichung der durchschnittlichen Bevölkerungsdichte des Quadranten (Zone 23). In Fig. 4 sind die meisten Quadranten mit einer linearen Skalierung ("Lin") versehen, während einige wenige Quadranten mit einer Normalverteilungsfunktion ("SV") skaliert sind. Mit Hilfe dieses Verfahrens ist die Ortsauflösung äußerst flexibel gestaltbar und nutzt den maximalen Speicherbereich einer binären Repräsentation aus.

Die nun zur Verfügung stehenden Angaben 27 über die Ortsinformation (27 Bits) werden anschließend mit einem Identifikationskriterium 28 zusammengeführt und durch den Mikroprozessor 17 zur eigentlichen Erzeugung des Paßwortes 6 verschlüsselt.

Auf der Paßwortkarte 1 ist ein zufällig erstelltes karten- und damit benutzerspezifisches Bytemuster (Sicherheitstoken 19) gespeichert, das für jeden Benutzer individuell erzeugt wird und eindeutig ist. Dasselbe Muster ist auch in dem Authentifizierungsserver hinterlegt. Die Länge des Bytemuster beträgt beispielsweise 2088 Bytes. Das Bytemuster umfaßt dabei folgende Angaben: 100xJahr, 12xMonat, 31xTag, 24xStunde, 60xMinute, 2x"0-30/30-59". Für die zeit- und regionsabhängige Paßworterzeugung ist damit sichergestellt, daß alle 30 Sekunden, für 100 Jahre, ein neues Paßwort 6 erzeugt werden kann.

Von diesem 2088 Bytes langem Bytemuster wird zeitabhängig ein bestimmter Teil mit einer Länge von 48 Bytes ausgewählt. Hierfür wird für jedes zeitbeschreibende Merkmal (100xJahr, 12xMonat, 31xTag, 24xStunde, 60xMinute, 2x"0-30/30-59") ein zufälliges Bytemuster (jeweils 8 Bytes) ausgewählt. Mit anderen Worten umfaßt der ausgewählte Teil des Bytemusters eine exakte Angabe über den Zeitpunkt der Paßworterzeugung. Es existiert anders ausgedrückt eine feste Zuordnung der Realzeit zu dem Bytemuster (Sicherheitstoken 19). Zusätzlich wird den aus dem Bytemuster ausgewählten Daten die 8 Bytes lange ID des aktuellen Koordinatensystem (ausgewählt aus insgesamt 32 Koordinatensystem-IDs) hinzugefügt.

Für eine aktuelle (der Paßworterzeugung zugeordnete) Zeit werden somit die jeweils ausgewählten "Einzelblöcke" (insgesamt also 7*8 Bytes = 56 Bytes) zusammengefügt, und durch einen Hash-Algorithmus auf 16 Bytes reduziert. Damit ist jede Möglichkeit ausgeschlossen, mittels Analyse der Paßwörter die hinterlegten Sicherheitstoken 19 auszurechnen. 4 Bytes (32 Bits) des Hashwertes dienen als Identifikationskriterium in dem zu erzeugenden Paßwort. Dieser Integerwert wird mit weiteren 4 Bytes des Hashwertes im XOR Verfahren verschlüsselt. Als Verschlüsselungsverfahren kommt ein One-Time-Pad (OTP) zum Einsatz. Die Erfindung benutzt also in der höchsten Sicherheitsstufe einen 32-Bit Wert (Teil des Sicherheitstokens 19) als Identifikationskriterium 28 für die Erzeugung des Paßwortes 6.

Zuletzt werden die 27 Bits der Ortsinformation 27 ebenso durch XOR Verknüpfung mit Teilen des Hashwertes erzeugt. Alle Bits werden sodann in Ihrer Reihenfolge vermischt. Diese Reihenfolge ist ebenso abhängig von dem ermittelten Hashwert.

Das letzte Bit des Ergebnisses (Zeitsteuerbit 29) gibt an, ob die Zeit, zu der das Paßwort 6 generiert wurde, "gerade" oder "ungerade" ist. Bei einem 30 Sekunden-Takt gilt die Mitte der Minute als "ungerade", bei einem 60 Sekunden-Takt die Minute. Das bedeutet, daß sich bei einem 30 Sekunden-Takt aller 30 Sekunden der Inhalt des Zeitstempels ändert, beispielsweise von "0" nach "1". Es sind auch andere Taktzeiten möglich. Mit anderen Worten werden die maximal 60 Bits zeitabhängig verschlüsselt. Dabei wird 1 Bit für die Kategorisierung ("0"/"1") des Zeitstempels verwendet. Diese zusätzliche Zeitinformation 29 dient u.a. dazu, die Gültigkeit des Paßwortes 6 zeitlich einzugrenzen. Hierzu wird dem Authentifizierungsserver ein Zeitrahmen vorgegeben, innerhalb dem das Paßwort 6 noch als gültig validiert werden kann. Bei einem 30 Sekunden-Takt kann es beispielsweise vorgesehen sein, die Gültigkeit des Paßwortes 6 auf 60, 120 oder 180 Sekunden zu begrenzen.

Die so erzeugten 60 Bits (32 Bits Identifikationskriterium, 27 Bits Ortsangabe, 1 Bit Zeitstempel) werden durch ein Base 32-Encoding auf dem Display 3 als 12 Zeichen mit dem Muster xxxx xxxx xxxx dargestellt. Dieses Verfahren ist nicht "casesensitiv", die Länge des Paßworts 6 damit auch in der höchsten Auflösungsstufe auf maximal 12 Zeichen bestimmt.

Ist ein kürzeres Paßwort 6 erforderlich, so kann dies einfach dadurch erreicht werden, daß geographische Regionen (Gebiete 22, Zonen 23) für die Ortsbestimmung von vornherein ausgeschlossen werden, und die Kategorisierung der zu erfassenden Fläche entsprechend angepaßt wird. Als kürzestmögliches Paßwort 6 sind beispielsweise 6 Zeichen vorgesehen.

Anhand von Fig. 6 wird nun der Ablauf einer Authentifizierung eines Benutzers beschrieben.

Der Benutzer eines Datenverarbeitungsmittel, beispielsweise einer Datenbankanwendung 31, möchte sich durch Angabe eines Login-Namens YYYY und eines Paßwortes XXXX XXXX XXXX bei der Datenbankanwendung 31 anmelden. Hierzu öffnet der Benutzer auf seinem Rechner ein Zugangsprogramm 32 für die Datenbankanwendung. Zur Erzeugung des Paßwortes 6 verwendet der Benutzer eine Paßwortkarte 1, wie oben beschrieben. Die Paßwortkarte 1 erzeugt ein aktuelle gültiges Paßwort 6, das auf dem Display 3 der Paßwortkarte 1 angezeigt und zugleich via Bluetooth an den Rechner übertragen und automatisch in das Zugangsprogramm 32 eingelesen wird. Bei Bedarf kann Zugangsprogramm 32 der Datenbankanwendung neben dem Paßwort 6 noch ein weiteres Sicherheitsmerkmal, beispielsweise den Fingerabdruck des Benutzers, abfragen. Nach der Eingabe von Login-Name und Paßwort 6 werden diese Angaben von dem Rechner des Benutzers an den Standort des zentralen Firmenrechners geschickt, beispielsweise durch Datenübertragung über eine Telefonleitung oder das Internet.

Der Firmenrechner 33 (das Anwendungssystem, auf dem die Datenbankanwendung 31 abläuft) erhält diese Benutzerzugangsanfrage. Auf dem Firmenrechner 33 ist eine Überprüfungskomponente 34 installiert, die zur Überprüfung sämtlicher Benutzerzugangsanfrage dient.

Diese Überprüfungskomponente 34 überträgt das im Zusammenhang mit der Benutzerzugangsanfrage des Benutzers erhaltene Paßwort 6 mit Hilfe einer Übertragungseinheit 35 als Teil einer Kommunikationseinrichtung 36 an einen Authentifizierungsserver 37, wo es empfangen und weiterverarbeitet wird. Die Übertragung erfolgt dabei beispielsweise über ein Datennetz, wie das Internet. Mit anderen Worten dient die Kommunikationseinrichtung 36 zur Herstellung und/oder Aufrechterhaltung einer Netzwerkverbindung mit dem Authentifizierungsserver 37.

Der Authentifizierungsserver 37 umfaßt ebenfalls eine Kommunikationseinrichtung 38 mit einer Empfangseinheit 39 zum Empfangen des Paßwortes 6. Primäres Ziel des Authentifizierungsserver 37 ist es, das übermittelte Paßwort 6 zu validieren, und daraus den exakten Benutzerstandort zu bestimmen.

Erhält der Authentifizierungsserver 37 ein Paßwort 6 zusammen mit einem Kriterium, das den Benutzer bezeichnet (bspw. bei der Herstellung der Paßwortkarte vergebener, anonymisierter Benutzername), so kann er, da ihm die originalen Sicherheitstoken 19 vollständig bekannt sind, daraus die Ortsinformationen sowie das Identifikationskriterium 28 (Teil des Sicherheitstokens 19) rückgewinnen.

Der Authentifizierungsserver 37 entschlüsselt mit anderen Worten das Paßwort 6 und gewinnt daraus einerseits die geographischen Daten des Standortes des anfragenden Benutzers sowie ein eindeutiges, zeitabhängiges Identifikationskriterium 28. Der Authentifizierungsserver 37 ist dabei so ausgelegt, daß es die Gültigkeit des Paßwortes 6 innerhalb von Millisekunden validieren kann.

Da das 2088 Bytes lange Bytemuster (Sicherheitstoken 19), aus dem bei der Paßworterzeugung zeitabhängig ein Teil ausgewählt wurde, auch dem Authentifizierungsserver 37 bekannt ist, kann dieser den Zeitpunkt der Paßworterzeugung rückermitteln, sobald er das mit Hilfe des Bytemusters erzeugte Identifikationskriterium 28 aus dem Paßwort 6 gewonnen hat.

Mit Hilfe des "Gerade"/"Ungerade"-Bits (Zeitstempel) kann der Authentifizierungsserver 37 zudem den Zeitpunkt, zu dem das Paßwort 6 erzeugt wurde, abschätzen. Dem Authentifizierungsserver 37 kann mit jeder Anfrage eine flexible Zeitspanne mitgeteilt werden, innerhalb derer er die Gültigkeit des Paßworts 6 überprüft. Das anfragende System übergibt dem Authentifizierungsserver 37 neben den zu überprüfenden Paßwort 6 auch die gewünschte Zeitspanne, innerhalb derer auf Gültigkeit geprüft werden soll. Der Authentifizierungsserver 37 validiert dann das übergebene Paßwort 6 gegenüber allen in dem gewünschten Zeitraum möglichen Kombinationen, ausgenommen der durch das gerade/ungerade Bit (Zeitstempel) ausgeschlossenen Zeitfenster. Dadurch ist eine flexibel gestaltbare Transaktionslaufzeit abgesichert.

Zum Validieren des Paßwortes 6 verfügt der Authentifizierungsserver über ein mit der Kommunikationseinrichtung 38 verbundenes Datenverarbeitungssystem 41 mit einer Speichereinheit 42 zur Ablage von Authentifizierungsvergleichsdaten 43, eine mit einem Mikroprozessor versehene Erfassungseinheit 44 zum Erfassen (Entschlüsseln) der in dem erhaltenen Paßwort 6 enthaltenen Authentifizierungsdaten, nämlich dem Identifikationskriterium 28, einerseits und der in dem erhaltenen Paßwort 6 enthaltenen geographischen Positionsdaten 27 andererseits und eine mit einem Mikroprozessor versehene Vergleichseinheit 45 zum Vergleichen der Authentifizierungsdaten mit den in der Speichereinheit 42 abgelegten Authentifizierungsvergleichsdaten 43. Erfassungseinheit 44 und Vergleichseinheit 45 können dabei auch in einem einzigen Mikroprozessor integriert sein.

Ist der Benutzer anhand des Identifikationskriteriums 28 erfolgreich identifiziert, überprüft der Authentifizierungsserver 37, ob die übermittelten Ortsinformation 27 zu einem in der Speichereinheit 42 hinterlegten Benutzerprofil 46 des Benutzers passen. Beispielsweise überprüft die Vergleichseinheit 45 dabei, ob der Benutzer sich von seinem derzeitigen Standort aus Zugang auf den Firmenrechner 33 (Anwendungssystem) erhalten darf. Falls das der Fall ist, so signalisiert er eine erfolgreiche Anmeldung, indem er ein entsprechendes Ergebnissignal 48 erzeugt und an die Überprüfungskomponente 34 zurücksendet. Zum Erzeugen des Ergebnissignals 48 in Abhängigkeit von dem Paßwort 6 dient eine Signalerzeugungseinrichtung 47 in Form eines Mikroprozessors. Vorzugsweise handelt es sich dabei um den gleichen Prozessor wie er auch für die Erfassungseinheit 44 und die Vergleichseinheit 45 Verwendung findet.

Zur Übertragung des Ergebnissignals 48 dient eine entsprechende Übertragungseinheit 49 als Teil der Kommunikationseinrichtung 38 des Authentifizierungsserver 37. Die Überprüfungskomponente 34 weist zu diesem Zweck als Teil der Kommunikationseinheit 36 eine Empfangseinheit 51 zum Empfangen des übertragenen Ergebnissignals 48 auf.

Darüber hinaus kann der Authentifizierungsserver 37 nach einer erfolgreichen Validierung des Identifikationskriteriums 28 auch anhand hinterlegter Benutzerprofile 46 bestimmen, ob der Benutzer die Berechtigung besitzt, auf das Anwendungssystem 33 zuzugreifen. Hierzu sind in der Speichereinheit 42 des Authentifizierungsservers 37 den Authentifizierungsvergleichsdaten 43 zugeordnete Benutzerprofildaten 46 abgelegt. Mit anderen Worten kann in den im Authentifizierungsserver 37 hinterlegten Benutzerprofilen 46 hinterlegt sein, welche Rechte ein Benutzer in dem jeweiligen Anwendersystem 33 besitzt. So ist es z.B. möglich, gewisse Anwendungen für den Zugriff vom Home-Office aus zu sperren und für den Firmenarbeitsplatz freizugeben. Die Benutzerprofile 43 können Kunden- oder anwendungsspezifisch flexibel gestaltet werden. Bei der Erzeugung des Ergebnissignals 48 werden dann Benutzerprofile 43, Teile von Benutzerprofilen 43 oder einzelne, sich aus einem Benutzerprofil 43 ergebende Zugriffs- bzw. Autorisierungsdaten berücksichtigt, so daß diese Informationen als Teil des Ergebnissignals 48 mit an die Überprüfungskomponenten 34 übergeben werden. Mit anderen Worten ist die Signalerzeugungseinrichtung 47 zum Erzeugen eines Ergebnissignals 47 ausgebildet, welches Benutzerprofildaten umfaßt. Darüber hinaus speichert der Authentifizierungsserver 37 jeden erfolgreichen Anmeldeprozeß mit Uhrzeit und den geographischen Informationen in seiner Speichereinheit 42 ab.

Bei der Verwendung von Benutzerprofilen 46 kann nicht nur vorgesehen sein, daß in einem einzigen, einem Benutzer zugeordneten Benutzerprofil 46, bestimmte Zugangsrechte angegeben sind, welche dann - abhängig von der geographischen Position des Benutzers - ausgewählt und an die Überprüfungskomponente 34 zurückübertragen werden. Es ist ebenfalls möglich, daß für einen Benutzer mehrere Benutzerprofile 46 vorhanden sind und der Authentifizierungsserver 37 in Abhängigkeit von der geographischen Position des Benutzers eines aus diesen vorhandenen Benutzerprofilen 46 auswählt und entsprechende Angaben an die Überprüfungskomponenten 34 zurücksendet.

Ist die Validierung des Identifikationskriteriums 28 nicht erfolgreich, weist der Authentifizierungsserver 37 den Anmeldevorgang durch Erzeugung und Übermittlung eines entsprechenden Ergebnissignals 48 an die Überprüfungskomponente 34 als erfolglos zurück. Der Fehlversuch wird mit den verfügbaren Daten abgespeichert. Weitere sicherheitsverschärfende Logiken sind denkbar, wie z.B. die Entfernungsüberprüfung zwischen zwei aufeinander folgenden Anmeldeversuchen (Brute Force Attack von geographisch entfernten Systemen). Je nach konfigurierter Logik kann der Authentifizierungsserver 37 den Zugang (account) des betreffenden Benutzers nach einer gewissen Anzahl von Fehlversuchen sperren, oder aber das anfragende System (die Überprüfungskomponente 34 des Anwendungssystems 33) von ungewöhnlichen Vorgängen (wie z.B. gezielten Angriffen) warnen.

Die Überprüfungskomponente 34 vergibt nach Empfang des Ergebnissignals 48 eine entsprechende Zugangsberechtigung an den Benutzer. Zu diesem Zweck weist die Überprüfungskomponente 34 eine Vergabeeinrichtung 52 zum Vergeben einer Zugangsberechtigung für den Benutzer in Abhängigkeit von dem Ergebnissignal 48 auf. Enthält das Ergebnissignal 48 zusätzliche Angaben zu Benutzerrechten, so nutzt die Vergabeeinrichtung 52 diese Angaben zur Vergabe von weiteren Benutzerrechten in Abhängigkeit von dem Ergebnissignal 48. Es erfolgt mit anderen Worten eine anwendungsspezifische Autorisierung.

Das erfindungsgemäße System ist so ausgelegt, daß es in jeden denkbaren Authentifizierungsprozess integriert werden kann. Ein Benutzer, der sich mit Hilfe des Systems anmeldet, muß keine zusätzlichen Installationsarbeiten vornehmen, sondern beim Anmeldeprozeß lediglich ein Paßwort 6 eingeben, das auf dem Display 3 seiner Paßwortkarte 1 angezeigt wird.

Der oben beschriebene Authentifizierungsserver 37 ist vorzugsweise derart ausgeführt, daß er beliebigen Anwendungen, welche eine Authentifizierung bzw. Autorisierung benötigen, als externer Dienst zur Verfügung stehen.

Zu diesem Zweck ist der Authentifizierungsserver 37 vorzugsweise derart ausgelegt, daß eine nahezu unbegrenzte Skalierbarkeit besteht und eine Systemverfügbarkeit von mindestens 99,99% gewährleistet ist. Herkömmliche und marktverfügbare Clustersysteme genügen diesen Anforderungen nur bedingt. Die Patentanmelderin stellt zu diesem Zweck ein auf die Bedürfnisse von sicheren, hochvolumigen und transaktionsorientierten Verbindungen zugeschnittes System zur Verfügung, welches sich u.a. dadurch auszeichnet, daß bereits auf Protokollebene Unterstützung für Verschlüsselung, sichere, zertifikatsbasierte Authentifizierung, digitale Signatur, Komprimierung, Transaktionskontrolle, Auto-Reconnection, Multi ESB connectivity mit clientseitigem Auto-Failover und Loadbalancing zur Verfügung steht. Das System ist grundlegend nach den Prinzipien der "Service Oriented Architecture (SOA)" ausgerichtet, was primär die asynchrone und stateless Verarbeitung von Service Requests zur Folge hat. Es umfaßt die notwendigen Dienste zur Überprüfung eines Paßwortes gegenüber den Benutzerprofilen, das Rechte-Management für die Neuanlage und Administration von Benutzerprofilen sowie die Methodik zur Archivierung der geographischen LogIn-Daten.

Die Erfindung kann entweder in Form von Computerhardware oder in Form von Computersoftware oder in einer Kombination aus Hardware und Software verwirklicht werden. Soweit die Erfindung in Form von Software, also als Computerprogrammprodukt, verwirklicht ist, werden sämtliche zuvor beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten

Computerprogrammprodukts.

### Bezugszeichenliste

- 1: Paßwortkarte
- 2: Platinenbaueinheit
- 3: Display
- 4: Ein/Aus-Schalter
- 5: Paßwort-Schalter
- 6: Paßwort
- 7: Bluetooth-Schalter
- 8: Fingerabdruck-Scanner
- 9: Kommunikationsschnittstelle
- 10: geographische Position
- 11: Paßworterzeugungseinheit
- 12: Positionsbestimmungskomponente
- 13: Paßworterzeugungskomponente
- 14: HF-Stufe
- 15: Antenne
- 16: Mikroprozessor
- 17: Mikroprozessor
- 18: RAM-Speicher
- 19: Sicherheitstoken
- 20: Koordinatensystem
- 21: Erdoberfläche
- 22: Gebiet
- 23: Zone
- 24: Breitenabweichung
- 25: Längenabweichung
- 26: Zonen-ID
- 27: Ortsinformation
- 28: Identifikationskriterium
- 29: Zeitsteuerbit
- 30: (frei)
- 31: Datenbankanwendung
- 32: Zugangsprogramm
- 33: Firmenrechner
- 34: Überprüfungskomponente
- 35: Übertragungseinheit
- 36: Kommunikationseinrichtung
- 37: Authentifizierungsserver
- 38: Kommunikationseinrichtung
- 39: Empfangseinheit
- 40: (frei)
- 41: Datenverarbeitungssystem
- 42: Speichereinheit
- 43: Vergleichsdaten
- 44: Erfassungseinheit
- 45: Vergleichseinheit
- 46: Benutzerprofil
- 47: Signalerzeugungseinrichtung
- 48: Ergebnissignal
- 49: Übertragungseinheit
- 50: (frei)
- 51: Empfangseinheit
- 52: Vergabeeinrichtung

## Patentansprüche

1. Vorrichtung (1) zum Erzeugen eines Authentifizierungsmerkmals (6) für einen Benutzer eines Datenverarbeitungsmittels (31),
- mit einer Einheit (13) zum Erzeugen des Authentifizierungsmerkmals (6) unter Verwendung benutzerspezifischer und/oder vorrichtungsspezifischer Authentifizierungsdaten (19) einerseits und der geographischen Position (10) des Benutzers andererseits und
- mit einer Anzeigeeinheit (3) zum Anzeigen des Authentifizierungsmerkmals (6) und/oder
- mit einer Übertragungseinheit (9) zum Übertragen des Authentifizierungsmerkmals (6) an eine Vorrichtung (34) zum Überprüfen einer Zugangsberechtigung.

2. Vorrichtung (1) nach Anspruch 1, bei welcher die Einheit (13) zum Erzeugen des Authentifizierungsmerkmals (6) ausgebildet ist zum Erzeugen einer Angabe (27) über die geographische Position (10) des Benutzers unter Verwendung der geographischen Position (10) des Benutzers.

3. Vorrichtung (1) nach Anspruch 1 oder 2, bei welcher die Einheit (13) zum Erzeugen des Authentifizierungsmerkmals (6) ausgebildet ist zum Komprimieren der geographischen Position (10) des Benutzers.

4. Vorrichtung (1) nach einem der Ansprüche 1 bis 3, bei welcher die Einheit (13) zum Erzeugen des Authentifizierungsmerkmals (6) ausgebildet ist zum Hinzufügen eines Zeitstempels (29).

5. Verfahren zur Erzeugung eines Authentifizierungsmerkmals (6) für einen Benutzer eines Datenverarbeitungsmittels (31), mit den Schritten:
- Erzeugen des Authentifizierungsmerkmals (6) unter Verwendung der geographischen Position (10) des Benutzers und
- Anzeigen des Authentifizierungsmerkmals (6) und/oder
- Übertragen des Authentifizierungsmerkmals (6) an eine Vorrichtung (34) zum Überprüfen einer Zugangsberechtigung.

6. Vorrichtung (34) zum Überprüfen einer Zugangsberechtigung,
- mit einer Kommunikationseinrichtung (36), umfassend eine Übertragungseinheit (35) zum Übertragen eines im Zusammenhang mit einer Benutzerzugangsanfrage erhaltenen, mit einer Vorrichtung (1) nach einem der Ansprüche 1 bis 4 unter Verwendung der geographischen Position (10) des Benutzers erzeugten Authentifizierungsmerkmals (6) an eine Authentifizierungsvorrichtung (37) und eine Empfangseinheit (51) zum Empfangen eines von der Authentifizierungsvorrichtung (37) übertragenen Ergebnissignals (47), und
- mit einer Vergabeeinrichtung (52) zum Vergeben einer Zugangsberechtigung für den Benutzer in Abhängigkeit von dem Ergebnissignal (47).

7. Vorrichtung (34) nach Anspruch 6, bei welcher die Vergabeeinrichtung (52) zur Vergabe von weiteren Benutzerrechten in Abhängigkeit von dem Ergebnissignal (47) ausgebildet ist.

8. Vorrichtung (37) zum Authentifizieren eines Benutzers mit Hilfe eines mit einer Vorrichtung (1) nach einem der Ansprüche 1 bis 4 unter Verwendung der geographischen Position (10) des Benutzers erzeugten Authentifizierungsmerkmals (6),
- mit einer Kommunikationseinrichtung (38), umfassend eine Empfangseinheit (39) zum Empfangen eines von einer Überprüfungsvorrichtung (34) übertragenen Authentifizierungsmerkmals (6) und eine Übertragungseinheit (49) zum Übertragen eines Ergebnissignals (48) an die Überprüfungsvorrichtung (34), und
- mit einer Signalerzeugungseinrichtung (41) zum Erzeugen des Ergebnissignals (48) in Abhängigkeit von dem Autheritifizierungsmerkmal (6).

9. Vorrichtung (37) nach Anspruch 8, bei welcher die Signalerzeugungseinrichtung (41) umfaßt:
- eine Speichereinheit (42) zur Ablage von Authentifizierungsvergleichsdaten (43) und
- eine Erfassungseinheit (44) zum Erfassen der in dem erhaltenen Authentifizierungsmerkmal (6) enthaltenen Authentifizierungsdaten (28) einerseits und der in dem erhaltenen Authentifizierungsmerkmal (6) enthaltenen geographischen Positionsdaten (27) andererseits, und
- eine Vergleichseinheit (45) zum Vergleichen der Authentifizierungsdaten (28) mit den in der Speichereinheit (42) abgelegten Authentifizierungsvergleichsdaten (43).

10. Vorrichtung (37) nach Anspruch 9, bei welcher in der Speichereinheit (42) den Authentifizierungsvergleichsdaten (43) zugeordnete Benutzerprofildaten (46) abgelegt sind.

11. Vorrichtung (37) nach Anspruch 10, bei welcher die Signalerzeugungseinrichtung (41) ausgebildet ist zum Erzeugen eines Ergebnissignals (48), welches Benutzerprofildaten (46) umfaßt.

12. Vorrichtung (37) nach Anspruch 11, bei welcher die Signalerzeugungseinrichtung (41) ausgebildet ist zum Auswählen von Benutzerprofildaten (46) in Abhängigkeit von der geographischen Position (10) des Benutzers.

13. System zum Authentifizieren eines Benutzers eines Datenverarbeitungsmittels (31), mit einer Vorrichtung (34) zum Überprüfen der Zugangsberechtigung nach Anspruch 6 oder 7 und einer Vorrichtung (37) zum Authentifizieren des Benutzers nach einem der Ansprüche 8 bis 12.

14. Verfahren zur Authentifizierung eines Benutzers eines Datenverarbeitungsmittels (31), mit den Schritten
- Übertragen eines im Zusammenhang mit einer Benutzerzugangsanfrage erhaltenen, mit einer Vorrichtung (1) nach einem der Ansprüche 1 bis 4 unter Verwendung der geographischen Position (10) des Benutzers erzeugten Authentifizierungsmerkmals (6) von einer Überprüfungsvorrichtung (34) an eine Authentifizierungsvorrichtung (37),
- Erzeugen eines Ergebnissignals (48) in Abhängigkeit von dem Authentifizierungsmerkmal (6) durch die Authentifizierungsvorrichtung (37),
- Übertragen des Ergebnissignals (48) von der Authentifizierungsvorrichtung (37) an die Überprüfungsvorrichtung (34),
- Vergeben einer Zugangsberechtigung für den Benutzer in Abhängigkeit von dem Ergebnissignal (48).

15. Verfahren nach Anspruch 14, bei welchem das Ergebnissignal (48) in Abhängigkeit von der geographischen Position (10) des Benutzers ausgewählte Benutzerprofildaten (46) umfaßt.

16. Verfahren nach Anspruch 15, mit dem weiteren Schritt:
- Vergeben von weiteren Benutzerrechten in Abhängigkeit von dem Ergebnissignal (48).

17. Authentifizierungsmerkmal (6) für einen Benutzer eines Datenverarbeitungsmittels (31), **dadurch gekennzeichnet, daß** es neben benutzerspezifischen und/oder vorrichtungsspezifischen Authentifizierungsdaten (28) eine Angabe (27) über die geographische Position (10) des Benutzers umfaßt.
